# EUROPEAN PATENT SPECIFICATION

(11) **EP 0 412 861 B1**
(45) Date of publication and mention of the grant of the patent: **10.11.1993**
(21) Application number: 90401888.4
(22) Date of filing: 29.06.1990
(51) Int. Cl.: F16K 15/04, F15B 13/01

(54) **Relief valve for hydraulic circuits**
Entlastungsventil für hydraulische Kreisläufe
Soupape de décharge pour circuits hydrauliques

(30) Priority: 07.08.1989 ES 8902800
(43) Date of publication of application: 13.02.1991
(73) Proprietor: BENDIX ESPANA S.A., E-08080 Barcelona 6 (ES)
(72) Inventor: Guasch, Esteve Cortes, C/o Bendix Europe Drancy, F-93700 Dranvy (FR)
(74) Representative: Bentz, Jean-Paul

(56) References cited:
- DE-A- 3 112 932
- DE-B- 2 012 297
- FR-A- 811 614

## Description

The invention relates to a relief valve as defined by the features of the preamble of claim 1 known for instance from DE-A 20 12 297, and more particularly to a relief valve for power steering systems.

Relief valves allow to maintain the pressure below a maximum value in order to prevent overloadings.

It is well known in the prior art, that such a valve can have a screw compressing a spring, this latter maintaining a valve member at rest in a closing position. When the pressure sets up above the predetermined threshold in the input chamber, the valve member is lifted against the spring in an open position.

This system is generally satisfactory but presents disadvantages because the movement of rotation of the screw is difficult to robotize in mass production. Moreover the adjustment of the screw may change during the lifetime of the valve, resulting in a modification of the characteristics thereof. Finally, the sealing of the screw, during use, can decrease and cause leaks.

The object of the present invention is to provide a relief valve which remains very cheap.

To achieve this result, the relief valve according to the present invention comprises the features as defined in claim 1. The screw has been taken off in order to replace the movement of rotation by a movement of translation in the axial direction of deformation. This plastic deformation compresses the resilient means and changes the original assembly preload.

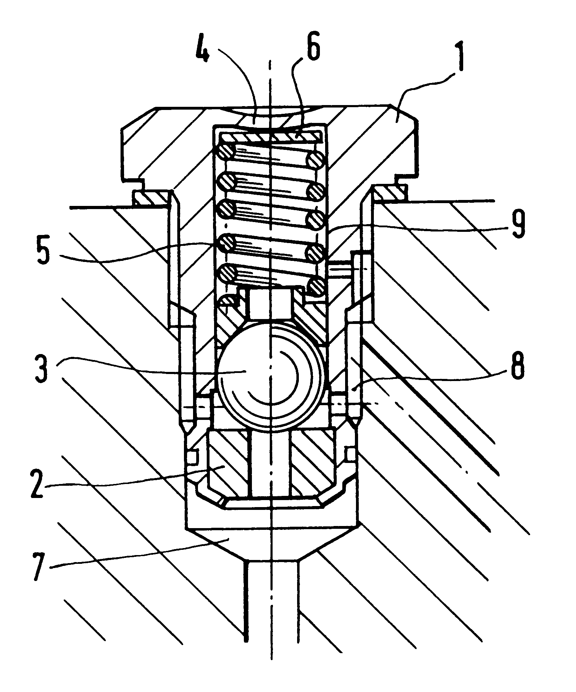

A preferred embodiment of the present invention will now be described more precisely with reference to the accompanying drawing.

The single figure is a section view of a relief valve according to the invention.

The relief valve comprises a valve body 1 in which is formed a blind bore 9 communicating with an input chamber 7, receiving the fluid under pressure and an output chamber 8, delivering the fluid under pressure with a predetermined maximum threshold ; this threshold is determined by a preloaded spring 5 located between a ball 3 settled on its seat 2 and a washer 6, located at the bottom of the blind bore 9 and against which bears the spring. The bottom of the blind bore 9 and outer surface of the valve body 1 define between them a thin wall or web 4. According to the invention, the threshold is adjusted by applying an axial plastic deformation to the web 4, with an appropriate tool, for example a rod. Such a deformation urges the washer 6 towards the ball 3, against the action of the spring 5, and thus increases the preload of the latter. By measuring the pressure at the outlet of the valve, the deformation can be carried on, until the desire threshold is reached.

## Claims

1. Relief valve in hydraulic circuits comprising a valve body (1) which includes a blind bore (9) closed by a web (4) and communicating with an input chamber (7) and an output chamber (8) between which are arranged a valve member (3) and a seat (2), a resilient means (5) provided between said web and said valve member maintaining said valve member at rest in a closing position, characterized in that the web is plastically deformable in an axial direction against the action of said resilient means (5) to adjust the pre-load of the latter.

2. Relief valve according to claim 1 characterized in that the resilient means (5) is a preloaded spring.

3. Relief valve according to claim 1 or 2 characterized in that a washer (6) is arranged between the web (4) and the resilient means (5).

4. Relief valve according to anyone of the preceding claims characterized in that the valve member (3) is a ball.

5. Relief valve according to anyone of the preceding claims characterized in that the axial direction of deformation is perpendicular to the plane of the seat (2) of the valve member.

## Patentansprüche

1. Entlastungsventil in hydraulischen Kreisen mit einem Ventilgehäuse (1), das eine Sackbohrung (9) enthält, welche von einem Wandteil (4) verschlossen wird und mit einer Einlaßkammer (7) sowie einer Auslaßkammer (8) kommuniziert, zwischen denen ein Ventilglied (3) und ein Sitz (2) angeordnet sind, einem elastischen Mittel (5), das zwischen dem Wandteil und dem Ventilglied vorgesehen ist und das Ventilglied in einer Schließstellung hält, dadurch gekennzeichnet, daß das Wandteil zum Verstellen der Vorspannung des elastischen Mittels (5) in axialer Richtung entgegen der Wirkung des elastischen Mittels (5) plastisch verformbar ist.

2. Entlastungsventil nach Anspruch 1, dadurch gekennzeichnet, daß das elastische Mittel (5) eine vorgespannte Feder ist.

3. Entlastungsventil nach Anspruch 1 oder 2, dadurch gekennzeichnet, daß eine Scheibe (6) zwischen dem Wandteil (4) und dem elastischen Mittel (5) angeordnet ist.

4. Entlastungsventil nach einem der vorhergehenden Ansprüche, dadurch gekennzeichnet, daß das Ventilglied (3) eine Kugel ist.

5. Entlastungsventil nach einem der vorhergehenden Ansprüche, dadurch gekennzeichnet, daß die axiale Richtung der Verformung auf der Ebene des Sitzes (2) des Ventilgliedes senkrecht steht.

## Revendications

1. Soupape de décharge pour circuits hydrauliques comprenant un corps (1) qui inclut un alésage borgne (9) fermé par une toile (4) et communiquant avec une chambre d'entrée (7) et une chambre de sortie (8) entre lesquelles sont disposés un élément de soupape (3) et un siège (2), un ressort (5) prévu entre ladite toile et ledit élément de soupape maintenant ladite soupape au repos en position de fermeture, caractérisée en ce que la toile (4) est plastiquement déformable dans le sens axial contre l'action du ressort (5) pour régler la précharge de ce dernier.

2. Soupape de décharge selon la revendication 1, caractérisée en ce que le ressort (5) est un ressort préchargé.

3. Soupape de décharge selon les revendications 1 ou 2, caractérisé en ce qu'une rondelle (6) est disposée entre la toile (4) et le ressort.(5).

4. Soupape de décharge selon une quelconque des revendications précédentes,caractérisée en ce que l'élément de soupape (3) est une bille.

5. Soupape de décharge selon une quelconque des revendications précédentes ,caractérisée en ce que le sens de déformation axiale est perpendiculaire au plan du siège (2) de la soupape.
